(19) Europäisches Patentamt
European Patent Office
Office européen des brevets

(11) **EP 2 922 015 A1**

(12) **EUROPÄISCHE PATENTANMELDUNG**

(43) Veröffentlichungstag:
**23.09.2015 Patentblatt 2015/39**

(51) Int Cl.:
***G06Q 50/00*** *(2012.01)*

(21) Anmeldenummer: **15000582.5**

(22) Anmeldetag: **02.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **20.03.2014 DE 102014004068**

(71) Anmelder: **Unify GmbH & Co. KG**
**81379 München (DE)**

(72) Erfinder:
• **Kleiner, Patrick**
**81476 München (DE)**
• **Klug, Karl**
**83714 Miesbach (DE)**

(74) Vertreter: **Fritzsche, Thomas**
**Fritzsche Patent**
**Naupliastraße 110**
**81545 München (DE)**

(54) **Verfahren und Vorrichtung zur Steuerung einer Konferenz**

(57) Die Erfindung betrifft ein Verfahren zur Steuerung einer Konferenz, bei der aus der Sicht wenigstens eines Teilnehmers wenigstens ein anderer Teilnehmer (121-125) in einem virtuellen Raum (100) dargestellt wird. Das Verfahren weist die zu Beginn der Konferenz und/oder bei Hinzutreten eines neuen Teilnehmers auszuführenden Schritte auf:

a) Ermitteln von Kontextdaten bezüglich jedes oder wenigstens eines ausgewählten des wenigstens einen anderen Teilnehmers bzw. des neuen Teilnehmers in mehreren Zeitintervallen;

b) Berechnen eines Beziehungswerts aus den Kontextdaten in den Zeitintervallen;

c) Bestimmen eines Beziehungsstatus, wobei der Beziehungsstatus durch eine von mehreren Kategorien ausgedrückt wird, die jeweils durch einen Schwellenwert definiert sind, anhand des berechneten Beziehungswerts; und

d) Anzeigen des Beziehungsstatus während der Kommunikation.

Die Erfindung betrifft ferner eine Vorrichtung zur Ausführung des Verfahrens.

Fig. 1

**Beschreibung**

Die Erfindung betrifft ein Verfahren und eine Vorrichtung zur Steuerung einer Konferenz, insbesondere einer virtuellen Konferenz.

Konferenzen gewinnen im betrieblichen Umfeld heutzutage immer mehr an Bedeutung. Es ist bekannt, Konferenzen mit Personen, die in einem Konferenzraum anwesend sind, und Personen, die sich nicht im Konferenzraum, sondern beispielsweise am Arbeitsplatz, im Home Office oder unterwegs befinden, abzuhalten, wobei die nicht anwesenden Personen über elektronische Kommunikationsmittel zugeschaltet sind. Um alle Konferenzteilnehmer entsprechend beachten zu können, ist es aus sozialer Sicht vorteilhaft, wenn Menschen, die sich besser kennen, dies auch in der Kommunikation entsprechend zum Ausdruck bringen. Die Vielzahl von sozialen Kontakten, die auch, aber nicht nur, durch soziale Netzwerke und über digitale Kommunikationsmittel gepflegt werden, sowie die zunehmende Termindichte bringen es mit sich, dass Personen, die nicht im Raum sind, nicht wiedererkannt werden oder gemeinsame Aktionen in Vergessen geraten sind. Man spricht in diesem Zusammenhang auch von "digitaler Demenz". In solchen Fällen wird der Konferenzteilnehmer wie ein Fremder behandelt, was zu Irritationen führen und die Konferenz stören kann. Auch können gesammelte "Erfahrungen" mit einem speziellen Konferenzteilnehmer in der Vergangenheit dazu beitragen, z. B. eine Entscheidung schneller herbeizuführen, wenn z. B. persönliche Vorlieben, sensible Themen oder Zonen der Kompromissbereitschaft bekannt sind. Wenn solche Erfahrungen mit jedem Konferenzteilnehmer präsent sind, kann das such die Produktivität einer Konferenz steigern.

Bisher konnte man persönliche Qualitäten und Eigenarten nur herausfinden, wenn man in der Konferenz Zeit dazu hat, oder man in einem Vorgespräch sondiert, wer dabei ist und woher und wie intensiv man sich kennt. Dazu ist aber oft keine Zeit, und somit geht diese Möglichkeit verloren, insbesondere wenn ein Teilnehmer nicht im Konferenzraum anwesend ist. Damit bleibt ein maßgebliches Hilfsmittel für eine effiziente und erfolgreiche Diskussion, individuelles Vertrauen oder Verständnis schnell aufzubauen, oft weitgehend ungenutzt. Dann kann sich eine Diskussion aufgrund dieses Mangels unnötig lange hinziehen, weil sich die Teilnehmer erst spät "richtig verstehen".

Es ist eine Aufgabe der vorliegenden Erfindung, ein Verfahren und eine Vorrichtung zur Kommunikationssteuerung in Konferenzen anzugeben, das in der Lage ist, die vorstehend genannten Nachteile im Stand der Technik wenigstens teilweise zu überwinden. Insbesondere besteht eine Aufgabe der vorliegenden Erfindung darin, ein Verfahren und eine Vorrichtung zur Kommunikationssteuerung in Konferenzen anzugeben, das in der Lage ist, die Effizienz und Produktivität von Konferenzen zu steigern.

Die Aufgabe wird erfindungsgemäß wenigstens in Teilaspekten durch die Merkmale der unabhängigen Ansprüche gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Steuerung einer Konferenz, bei der aus der Sicht wenigstens eines Teilnehmers wenigstens ein anderer Teilnehmer in einem virtuellen Raum dargestellt wird, vorgeschlagen, wobei das Verfahren die zu Beginn der Konferenz und/oder bei Hinzutreten eines neuen Teilnehmers und/oder auf Veranlassung eines des wenigstens einen Teilnehmers auszuführenden Schritte aufweist:

    a) Ermitteln von Kontextdaten bezüglich jedes oder wenigstens eines ausgewählten des wenigstens einen anderen Teilnehmers bzw. des neuen Teilnehmers in mehreren Zeitintervallen;
    b) Berechnen eines Beziehungswerts aus den Kontextdaten in den Zeitintervallen;
    c) Bestimmen eines Beziehungsstatus, wobei der Beziehungsstatus durch eine von mehreren Kategorien ausgedrückt wird, die jeweils durch einen Schwellenwert definiert sind, anhand des berechneten Beziehungswerts; und
    d) Anzeigen des Beziehungsstatus während der Kommunikation.

Eine Konferenz ist im Sinne der Erfindung ein Kommunikationsereignis zwischen mehreren, vorzugsweise mehr als zwei Teilnehmern, unter Austausch von wenigstens Audio- und Video-Daten, wobei der Datenaustausch durch elektronische Mittel der Kommunikation, vorzugsweise über ein paketbasiertes Protokoll wie etwa TCP/IP oder dergleichen, erfolgt. Ein virtueller Raum ist im Sinne der Erfindung eine geeignete Oberfläche auf einem Endgerät des wenigstens einen Teilnehmers. Mit anderen Worten, es handelt sich um eine virtuelle Konferenz oder Telekonferenz. Unter Kontextdaten werden im Sinne der Erfindung Daten über die Beziehung des Teilnehmers mit einem jeweiligen anderen Teilnehmer verstanden, wie insbesondere weiter unten genauer beschrieben. Ein Beziehungswert ist im Sinne der Erfindung ein Zahlenwert, der eine Aussage über die Intensität einer Beziehung erlaubt. Mit jedem Kommunikationsvorgang, der zwischen Personen stattfindet, ändern sich die Kontextdaten in Bezug auf diese Personen. Da zum Zeitpunkt der Konferenz die Kontextdaten neu ermittelt werden, wird der Status der Beziehung stets aktualisiert bestimmt. Der aktuelle Beziehungsstatus zu jedem oder einzelnen der anderen Teilnehmern kann dem wenigstens einen Teilnehmer unmittelbar angezeigt werden, sodass an sich bekannte, aber vergessene Beziehungen oder Erfahrungen wirksam ins Gedächtnis gerufen werden können. Dadurch ist es auch ohne intensive Vorbereitung möglich, auf einer angemessenen Vertrautheitsebene miteinander umzugehen und den anderen Teilnehmer besser einzuschätzen. Längere "Aufwärmrunden" können entfallen oder verkürzt werden. Die Produktivität und Effizienz der Konferenz kann gesteigert werden. Durch Einordnen in definierte Kategorien ist auch eine intuitive Erfassung des Beziehungsstatus durch den Teilnehmer erleichtert.

Die Kontextdaten können aus Datenquellen ermittelt werden, die aus der Gruppe ausgewählt sind, welche umfasst:

- soziale Netzwerke;
- firmeninterne Kommunikations- und Personenvernetzungsdatenbanken;
- Verbindungsdatenbanken von Kommunikationsanbietern wie etwa den Anbietern von E-Mail-, Telefonie-, VoIP-, Mobilfunk-Diensten.

Diese Aufzählung ist nicht abschließend zu verstehen. Die verschiedensten Arten von Datenquellen wie z. B. von Beziehungsnetzwerken können ausgewertet und in den Beziehungsstatus einbezogen werden.

Ferner können die Kontextdaten Ereignisse betreffen, die aus der Gruppe ausgewählt sind, welche umfasst:

- Kommunikationsereignisse wie etwa Telefonate, e-Mails, SMS, MMS, oder dergleichen;
- Freundschaftsstatus, Nachrichten, Like-Setzungen, Kommentierungen, Blog-Einträge oder dergleichen;
- organisatorische Ereignisse;
- berufliche Zusammenarbeit;
- Projekte;
- Meetings;
- gemeinsame Veröffentlichungen oder Konferenzbeiträge;
- gemeinsame Reisen oder Veranstaltungen;
- gemeinsame Interessen;
- Nachbarschaft;
- Mitgliedschaft in gleichen Vereinen, Gesellschaften, politischen Parteien oder anderen Personenvereinigungen,

wobei auch diese Aufzählung nicht abschließend zu verstehen ist. Die verschiedensten Arten von Ereignissen können ausgewertet und in den Beziehungsstatus einbezogen werden. Es ist denkbar, Kontext- bzw. Metadaten und /oder Inhalte zu Einzelereignissen aus den Datenquellen während der Konferenz abzurufen und anzuzeigen.

Die Kontextdaten können einen Zählwert von Ereignissen, die dem anderen Teilnehmer aus der Sicht des Teilnehmers zuzuordnen sind, sein oder umfassen, wobei vorzugsweise der Zählwert von Ereignissen zur Berechnung des Beziehungswerts nach zeitlicher Ferne von dem Zeitpunkt der Konferenz und/oder nach Art und/oder Umständen des Ereignisses gewichtet wird. Somit kann die Beziehung durch einfaches Zählen von Kommunikationsereignissen bewertet werden. Als Beispiel einer Gewichtung nach zeitlicher Ferne des Ereignisses kann ein weiter zurückliegendes Ereignis geringer gewichtet werden als ein jüngeres Ereignis. Als Beispiel einer Gewichtung nach Art des Ereignisses kann ein gemeinsam organisiertes Projekt oder eine gemeinsame Veröffentlichung höher gewichtet werden als eine Like-Setzung in einem sozialen Netz. Als Beispiel einer Gewichtung nach Umständen des Ereignisses kann bspw. auch eine zeitliche Länge von Telefonaten, eine Textlänge von ausgetauschten Textnachrichten oder Textdateien, ein Datenvolumen von ausgetauschten Dateien etc. in die Bewertung einfließen.

Die Zeitintervalle können ein aktuelles Zeitintervall, das bis zum Zeitpunkt der virtuellen Konferenz reicht, und ein vorheriges Zeitintervall, das dem aktuellen Zeitintervall unmittelbar vorangeht, umfassen, wobei eine Länge der Zeitintervalle insbesondere einen Monat umfasst. Ein Monat ist ein überschaubarer Zeitraum für aktive Beziehungen. Zur feineren Aufgliederung sind auch engere Zeitintervalle wie etwa zwei Wochen oder eine Woche oder ein Tag denkbar. Bei ohnehin schwachen Beziehungen kann ein längerer Zeitraum wie etwa ein Jahr oder länger geeignet sein, um auch z. B. alte Schulfreunde, Kommilitonen, länger zurückliegende Urlaubsbekanntschaften, etc. zu erfassen. Der Beziehungswert wird vorzugsweise nach der Formel

$$B(T) = V \times Z(T) + (1 - V) \times B(T-1)$$

berechnet, wobei T ein aktuelles Zeitintervall ist, T-1 ein vergangenes Zeitintervall unmittelbar vor dem aktuellen Zeitintervall t ist, Z ein Zählwert von Ereignissen in einem jeweiligen Zeitintervall ist, V ein Faktor ist, der ein Vergessen von Ereignissen über die Zeit simuliert und der einen Wert von 0 bis 1, vorzugsweise von 0,4 bis 0,8, aufweist" und B der Beziehungswert ist. Durch die Einführung eines Erinnerungsfaktors wird eine Vergesslichkeitskurve eingeführt. Die Formel verwirklicht im Wesentlichen ein einfaches digitales Tiefpassfilter. Alternativ sind auch andere Filtereigenschaften einsetzbar. Optional können statistische Ausreißer über eine Medianfilterung geglättet werden.

In einer bevorzugten Ausführungsform wird bzw. werden wenigstens der Schritt a), vorzugsweise die Schritte a) und b), besonders bevorzugt die Schritte a) bis c) für jede oder mehrere ausgewählte oder eine von Beziehungsebenen separat ausgeführt, wobei die Beziehungsebene/-n aus der Gruppe ausgewählt ist/sind, die umfasst:

- öffentliche Beziehungen;
- private Beziehungen;
- firmenbezogene Beziehungen.

Mit anderen Worten, für jede der Beziehungsebenen werden Kontextdaten ermittelt, ein Beziehungswert wird vorzugsweise auch für jede der Beziehungsebenen berechnet und besonders bevorzugt wird auch für jede der Beziehungsebenen der Beziehungsstatus bestimmt. D.h., das oben erfindungsgemäße Verfahren kann vollständig für jede Beziehungsebene separat durchgeführt werden. Andererseits ist es auch möglich, die Ebenen an einer beliebigen Stelle im Verfahrensablauf zu einem Gesamtergebnis zusammenzuführen, indem beispielsweise ein Maximalwert des Beziehungsstatus aller Ebenen als Gesamtergebnis ausgewählt wird oder ein Gesamt-Beziehungsstatus auf der Grundlage einer gegebenenfalls gewichteten Summe der Beziehungswerte aller Ebenen bestimmt wird oder ein Gesamt-Beziehungswert auf der Grundlage einer gegebenenfalls gewichteten Summe der Kontextdaten aller Ebenen berechnet wird. Die Anzeige des Ergebnisses in Schritt d) kann alle oder eine oder mehrere vorgegebene oder eine oder mehrere ausgewählte der Beziehungsebenen betreffen. D.h., der wenigstens eine Teilnehmer kann beispielsweise auswählen, ob er eine ausgewählte Beziehungsebene oder ein aus allen oder mehreren Beziehungsebenen integriertes Beziehungsergebnis angezeigt haben möchte.

Die Aufzählung der Beziehungsebenen ist wiederum nicht abschließend zu verstehen. Beispielsweise können mehrere Ebenen für firmenbezogene Beziehungen existieren, wenn ein Teilnehmer mehrere Firmenbezüge aufweist. Auch können mehrere Ebenen privater oder öffentlicher Beziehungen definiert sein, wie etwa in Bezug auf Familie, auf berufliche (soweit nicht firmenbezogene) Kontakte, auf einen Verein oder eine politische Partei. Es kann vorgesehen sein, dass die Beziehungsebenen für jeden Teilnehmer frei definierbar und konfigurierbar sind.

Die Anzeige des Beziehungsstatus kann durch ein Mittel erfolgen, das aus der Gruppe ausgewählt ist, die umfasst:

- Tonsignale;
- Farbe, insbesondere eines Hintergrunds, einer Umrandung, einer Füllung;
- Tags;
- Icons, Emoticons;
- Bilder, Grafiken, Karikaturen;
- Filmstücke, Musikstücke, Jingles.

Die Aufzählung ist erneut nicht abschließend zu verstehen. Die Darstellung kann so ausgewählt werden, dass der Beziehungsstatus und die jeweilige, bewertete Ebene sinnfällig "ins Auge springt". Die Darstellung kann für unterschiedliche Beziehungsebenen von unterschiedlicher Art sein und/oder durch unterschiedliche Mittel erfolgen.

Der Beziehungsstatus umfasst vorzugsweise die Kategorien "starke Beziehung", "mittlere Beziehung", "schwache Beziehung" und "keine Beziehung". Die zur Abgrenzung der Beziehungsstatus verwendeten Schwellenwerte sind nach der Lebenserfahrung sinnvoll zu setzen und können ggf. vom Benutzer angepasst werden.

Es versteht sich, dass die Erfindung auch durch ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist, und ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein kann. Dabei kann der Computer durch ein Konferenzsystem, einen Konferenzserver, ein Konferenzendgerät, ein individuelles Endgerät eines Teilnehmers oder dergleichen verkörpert sein.

Gemäß einem weiteren Gesichtspunkt der Erfindung wird eine Vorrichtung zur Ausführung des Verfahrens vorgeschlagen, wobei das Verfahren nach der vorstehenden Beschreibung ausgebildet ist. Die Aufgabe der vorliegenden Erfindung wird durch diese Vorrichtung aus denselben Gründen gelöst, wie diese weiter oben für das entsprechende Verfahren angegeben wurden. Die Vorrichtung kann beispielsweise ein Konferenzserver oder eine zentrale Konferenzeinheit oder ein Endgerät sein.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind

Fig. 1 eine Darstellung eines virtuellen Konferenzraums aus der Sicht eines Teilnehmers;

Fig. 2A eine Darstellung einer Auswahl von Teilnehmern aus dem virtuellen Konferenzraum mit zusätzlichen Informationen;

Fig. 2B eine Darstellung einer anderen Auswahl von Teilnehmern aus dem virtuellen Konferenzraum mit zusätzlichen Informationen;

Fig. 3 ein Ablaufdiagramm zur Veranschaulichung eines Verarbeitungsprozesses einer Kommunikationssteuerung;

Fig. 4 ein Blockschaubild zur Veranschaulichung von Verarbeitungsstufen mit Beziehungen von Hardware- und Software-Komponenten in dem Prozess von Fig. 3

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

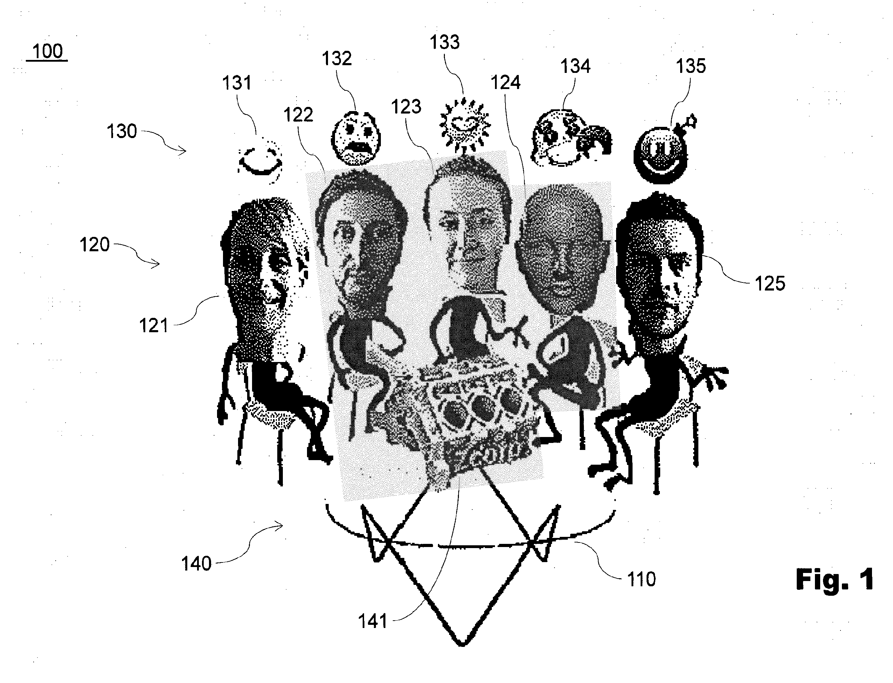

Fig. 1 zeigt eine Darstellung eines virtuellen Konferenzraums 100 aus der Sicht eines Teilnehmers einer Videokonferenz. Mit anderen Worten, der Konferenzraum 100 entspricht einem Bildschirminhalt oder -teilinhalt (sog. Fenster) auf einem Bildschirm des einen Teilnehmers. Der eine Teilnehmer, der hier nicht näher dargestellt ist, wird nachstehend auch als Betrachter bezeichnet.

Der virtuelle Konferenzraum 100 weist eine Bezugsstruktur 110 auf, die einen Konferenztisch symbolisiert. Um die Bezugsstruktur 110 herum ist eine Teilnehmergruppe 120 mit Teilnehmern 121, 122, 123, 124, 125 angeordnet. Ferner ist oberhalb der Teilnehmergruppe 120 eine Symbolgruppe 130 mit Symbolen 131, 132, 133, 134, 135 angeordnet, wobei jedes der Symbole 131, 132, 133, 134, 135 einem der Teilnehmer 121, 122, 123, 124, 125 zugeordnet ist. Genauer gesagt, das Symbol 131 ist dem Teilnehmer 121 zugeordnet, das Symbol 132 ist dem Teilnehmer 122 zugeordnet, das Symbol 133 ist dem Teilnehmer 123 zugeordnet, das Symbol 134 ist dem Teilnehmer 124 zugeordnet, und das Symbol 135 ist dem Teilnehmer 125 zugeordnet. Die Symbole 131, 132, 133, 134, 135 sind sogenannte Emoticons, die einen emotionalen und/oder Beziehungszustand des jeweiligen Teilnehmers 121, 122, 123, 124, 125 symbolisieren. Ferner ist eine Objektgruppe 140 vorgesehen, die hier nur ein einziges Objekt 141 umfasst, das auf der Bezugsstruktur 110 (Konferenztisch) platziert ist. Das Objekt 141 entspricht einer Datei oder einem Dateiordner eines Objekts, das von dem Betrachter im gleichen oder einem separaten Bildschirmbereich geöffnet werden kann.

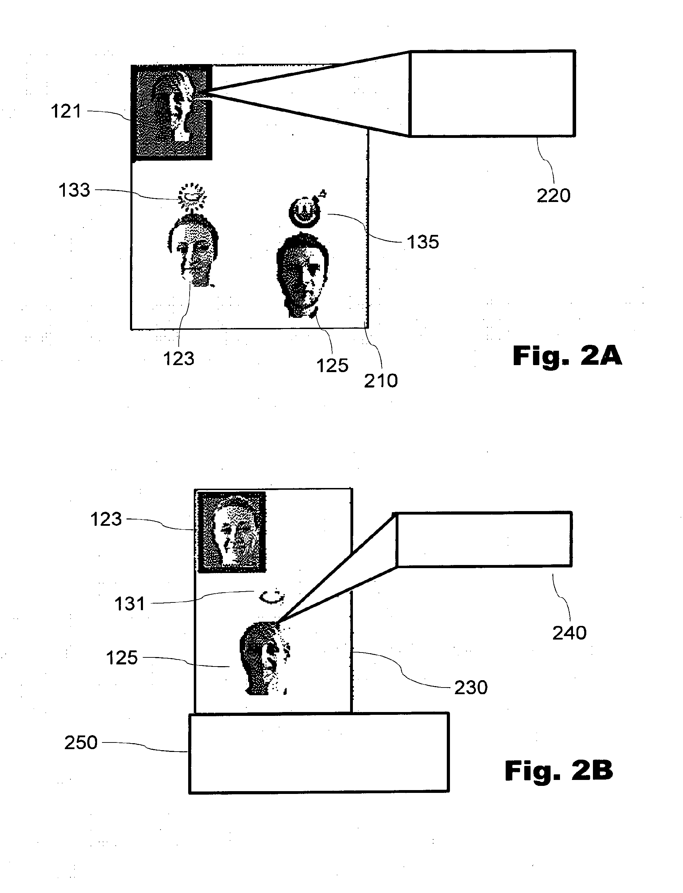

Fign. 2A und 2B zeigen jeweils eine Darstellung einer Auswahl von Teilnehmern aus dem virtuellen Konferenzraum 100 mit zusätzlichen Informationen.

Genauer gesagt zeigt Fig. 2A einen Auswahlbereich 210, in dessen linker oberer Ecke der Teilnehmer 121 von Fig. 1 in hervorgehobener Form, hier durch einen Rahmen und einen eingefärbten Hintergrund verwirklicht, dargestellt ist. Dem Teilnehmer 121 ist ein Informationsblock 220 zugeordnet, der von dem Auswahlfenster 210 optisch abgesetzt ist. Ferner sind in dem Auswahlbereich 210 die Teilnehmer 123 und 125 mit ihren jeweiligen Symbolen (Emoticons) 133, 135 enthalten.

Der Informationsblock 220 kann beispielsweise spezifische Personeninformationen wiedergeben, wie etwa:

- persönliche Notizen,
- persönliche Bewertungen,
- Lebenslauf.

Der Auswahlbereich 210 ist beispielsweise von dem Betrachter des Konferenzraums 100 von Fig. 1 erzeugt worden. Der Auswahlbereich 210 erlaubt eine Schwerpunktsetzung auf den Teilnehmer 121, der von dem Betrachter ausgewählt oder beispielsweise durch eine Blickrichtung des Betrachters identifiziert werden kann. Mit anderen Worten, der Fokus kann von dem betrachtenden Teilnehmer selbst eingestellt werden, bzw. wird der Fokus durch z. B. Gesichtszuwendung über eine Kamera des Konferenzorts erkannt und entsprechend festgelegt. Die weiteren Teilnehmer 123, 125 in dem Auswahlbereich 210 können beispielsweise Teilnehmer sein, die zuvor ausgewählt oder identifiziert oder von einem Konferenzserver oder dergleichen aufgrund anderer Kriterien festgelegt worden waren.

Fig. 2B zeigt ferner einen Auswahlbereich 230, in dessen linker oberer Ecke der Teilnehmer 123 in hervorgehobener Form, hier durch einen Rahmen und einen eingefärbten Hintergrund verwirklicht, dargestellt ist. Dem Teilnehmer 123 ist ein Informationsblock 235 zugeordnet, der von dem Auswahlbereich 230 optisch abgesetzt ist. Ferner ist in dem Auswahlbereich 230 der Teilnehmer 125 mit seinem Symbol (Emoticon) 135 enthalten. Unterhalb des Auswahlbereichs 230 ist ein Informationsblock 250 vorgesehen.

Der Informationsblock 240 kann beispielsweise spezifische Personeninformationen wiedergeben, wie etwa:

- Aufruf letzter Publikationen,
- Ergebnis der letzten Besprechung.

Der Informationsblock 250 kann individuelle Beziehungs-Informationen zu anderen Konferenzteilnehmern als Summeninformation enthalten. Die individuelle Beziehungsinformation wird aus den historischen Daten gewonnen. Die etwa aus der Datenanalyse bekannte Stimmungserkennung (engl. "sentiment detection") kann emotionale Aussagen erkennen. Durch Zusammenfassen dieser emotionalen Aussagen kann im Vergleich zu den Werten anderer Personen, mit denen eine Beziehung besteht, eine Sympathie-Reihenfolge festgelegt werden. Die summarische Beziehung kann dann auf einer Skala Sympathie ↔ Antipathie eingeordnet werden. Das ist auch online möglich, indem etwa negative Aussagen/Gegenreden bzw. positive Aussagen/Gegenreden über die Stimmungserkennung ausgewertet werden. Die Summeninformation ist dann die summarische Beziehung aufgrund der von der Stimmungserkennung gelieferten emotionalen Werte hinsichtlich Sympathie und Antipathie.

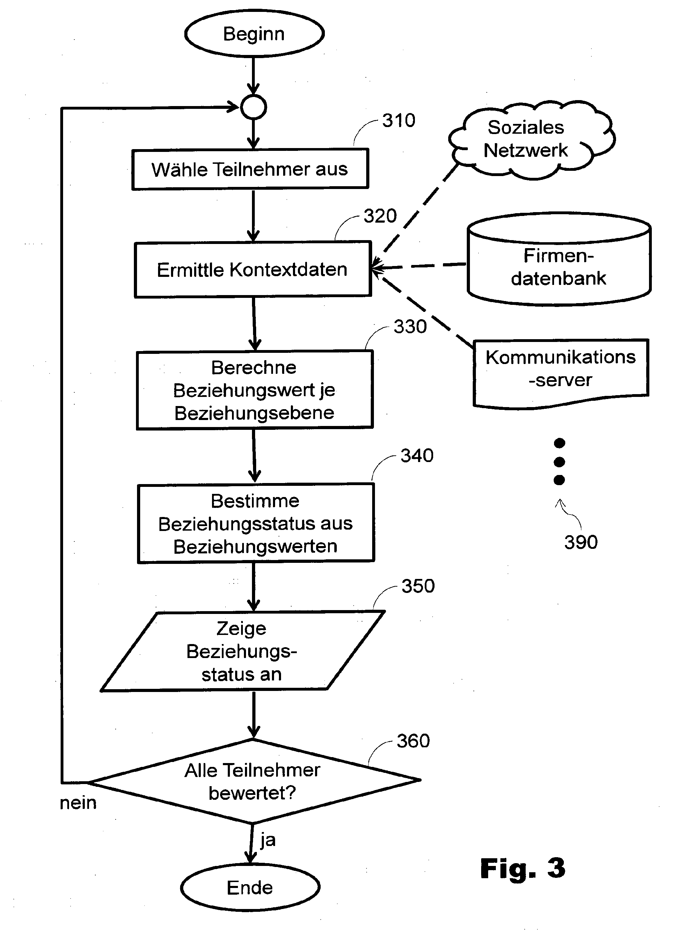

Fig. 3 zeigt einen Prozess 300 einer Kommunikationssteuerung. Mit Aufruf des Prozesses 300 wird eine Vorauswahl aus den an der Konferenz teilnehmenden Teilnehmern an den Prozess 300 übergeben. Die Vorauswahl kann durch den Betrachter oder das System erfolgen.

Nach Beginn (Aufruf) des Prozesses wird, nach Durchlaufen einer nicht näher bezeichneten Übergangsstelle, in Schritt 310 ein Teilnehmer aus den an den Prozess 300 übergebenen Teilnehmern ausgewählt.

Danach werden in Schritt 320 Kontextdaten zu dem in Schritt 310 ausgewählten Teilnehmer ermittelt. Die Kontextdaten geben den Beziehungszustand mit dem ausgewählten Teilnehmer auf mehreren Beziehungsebenen wieder. Die Beziehungsebenen können beispielsweise umfassen:

- Private Beziehungen (p),
- Öffentliche Beziehungen (ö),
- Firmenbezogene Beziehungen (f).

Die Kontextdaten werden aus Datenquellen 390 wie beispielsweise aus sozialen Netzwerken, aus einer Firmendatenbank, einem Kommunikationsserver oder anderen Quellen ermittelt und können sich auf Ereignisse wie etwa organisatorische Daten, Kommunikationsdaten (Verbindungsdaten), Projektdaten, Meeting-Daten, gemeinsame Veröffentlichungen etc. beziehen. Der Beziehungszustand, der durch die Kontextdaten ausgedrückt wird, entspricht in jeder Ebene jeweils einem Zählwert Z von Ereignissen, die auf der jeweiligen Ebene aufgetreten sind.

Danach wird in Schritt 330 zu jeder Beziehungsebene ein Beziehungswert B berechnet. Der Beziehungswert B jeder Beziehungsebene errechnet sich aus den auf der jeweiligen Beziehungsebene erfolgten Ereignissen über der Zeit. Zur Priorisierung jüngerer Ereignisse wird eine Vergesslichkeitskurve eingeführt, die durch eine Vergesslichkeitskonstante V charakterisiert ist. Mit anderen Worten, es wird zunächst ein geeignetes Zeitintervall T ausgewählt, in welchem die jeweils erfolgten Ereignisse gezählt werden, um zu einem Zählwert Z in jedem Zeitintervall T zu gelangen. Der Beziehungswert B wird dann über ein digitales einfaches Tiefpassfilter berechnet. Alternativ kann man auch andere Filterfunktionen benutzen oder beispielsweise mit einer Medianfilterung statistische Ausreißer wegfiltern. Als eine geeignete Filterfunktion hat sich die Funktion

$$B(T) = V \times Z(T) + (1 - V) \times B(T-1)$$

herausgestellt. Dabei ist T ein aktuelles Zeitintervall, ist T-1 ein vorheriges Zeitintervall unmittelbar vor dem aktuellen Zeitintervall T, ist Z der Zählwert in dem jeweiligen Zeitintervall, ist V der Vergesslichkeitsfaktor, der ein Vergessen von Ereignissen über die Zeit simuliert, und ist B der Beziehungswert.

Die Länge jedes Zeitintervalls T, T-1 kann standardmäßig auf einen Monat festgelegt sein. Es können aber auch anderen Zeitintervalle verwendet werden. Es ist auch möglich, auf unterschiedlichen Beziehungsebenen unterschiedliche Zeitintervalle zu verwenden. Es ist denkbar, dass ein Monat für schwache Beziehungen ein zu kurzer Zählzeitraum ist, sodass eventuell Quartale, Halbjahre, Jahre, oder noch längere Zeiträume geeigneter sein können.

Mit der Wahl des Zeitintervalls T und des Vergesslichkeitsfaktors V kann man auch die Beziehungen auf einen betrachteten Teilnehmer hin normieren. Weniger kommunikative Personen können nämlich starke Beziehungen haben, obwohl sie generell seltener kommunizieren als andere.

Im konkreten Fall werden für die drei Beziehungsebenen ö, p, f jeweils die Beziehungswerte

$$B_ö(T) = V \times Z_ö(T) + (1 - V) \times B_ö(T-1)$$

für die öffentliche Beziehungsebene,

$$B_p(T) = V \times Z_p(T) + (1 - V) \times B_p(T-1)$$

für die private Beziehungsebene und

$$B_f(T) = V \times Z_f(T) + (1 - V) \times B_f(T-1)$$

für die Firmen-Beziehungsebene

berechnet.

Danach wird in Schritt 340 für jede Beziehungsebene ein Beziehungsstatus aus den in Schritt 330 berechneten Beziehungswerten bestimmt. Hierzu werden Kategorien verwendet, welche die Stärke einer Beziehung wiederspiegeln und die jeweils durch Schwellenwerte für den Beziehungswert charakterisiert sind. Beispielsweise werden die Kategorien "starke Beziehung", "mittlere Beziehung", "schwache Beziehung" und "keine Beziehung" verwendet. Falls der Beziehungswert $B(T)$ kleiner als ein Schwellenwert $B_{schwach}$ ist, wird die Beziehung der jeweiligen Beziehungsebene der Kategorie "keine Beziehung" zugeordnet. Wenn der Beziehungswert $B(T)$ größer als der Schwellenwert $B_{schwach}$, aber kleiner als ein Schwellenwert $B_{mittel}$ ist, wird die Beziehung der jeweiligen Beziehungsebene der Kategorie "schwache Beziehung" zugeordnet. Wenn der Beziehungswert $B(T)$ größer als der Schwellenwert $B_{mittel}$, aber kleiner als ein Schwellenwert $B_{stark}$ ist, wird die Beziehung der jeweiligen Beziehungsebene der Kategorie "mittlere Beziehung" zugeordnet. Wenn der Beziehungswert $B(T)$ größer als ein Schwellenwert $B_{stark}$ ist, wird die Beziehung der jeweiligen Beziehungsebene der Kategorie "starke Beziehung" zugeordnet.

Dann wird in Schritt 350 der Beziehungsstatus des definierten Teilnehmers angezeigt.

In dem anschließenden Schritt 360 wird beurteilt, ob alle bzw. alle ausgewählten Teilnehmer bewertet wurden. Wenn dies der Fall ist (ja in Schritt 360), endet der Prozess 300. Anderenfalls (nein in Schritt 360) springt der Prozess zu der oben genannten Übergangsstelle zurück, die wieder zu dem Schritt 310 führt.

Der Prozess 300 kann von einer zentralen Konferenzeinheit ausgeführt werden. Alternativ kann der Prozess 300 auch von einem individuellen Endgerät oder System eines Konferenzteilnehmers ausgeführt werden.

Nachdem der Beziehungswert $B(T)$ in jeder Beziehungsebene ö, p, f über die Vergangenheit hinweg bei jedem Ereignis neu berechnet werden kann, indem die Ereigniszahlen Z je Beziehungsebene für das aktuelle Zeitintervall T sowie den Beziehungswert B der letzten Zeiteinheit T-1, kann der aktuelle Beziehungswert jederzeit neu berechnet werden. Dabei müssen nur Beziehungswerte gehalten werden, die größer sind als der Schwellenwert $B_{schwach}$ für eine schwache Beziehung.

Es versteht sich, dass die Erfindung nicht auf die drei genannten Ebenen beschränkt ist. So kann die private Ebene beispielsweise in eine persönliche und eine berufliche Ebene aufgeteilt sein, es kann mehrere firmenbezogene Beziehungsebenen für verschiedene Firmen geben, es können politische oder Vereinsebenen vorgesehen sein, etc. Die Zählung der Ereignisse kann je nach Quelle gewichtet sein. So ist es denkbar, dass langfristige Projekte mit vergleichsweise wenig Kommunikationsereignissen höher gewichtet werden als Postings auf einem sozialen Netzwerk, SMS oder dergleichen.

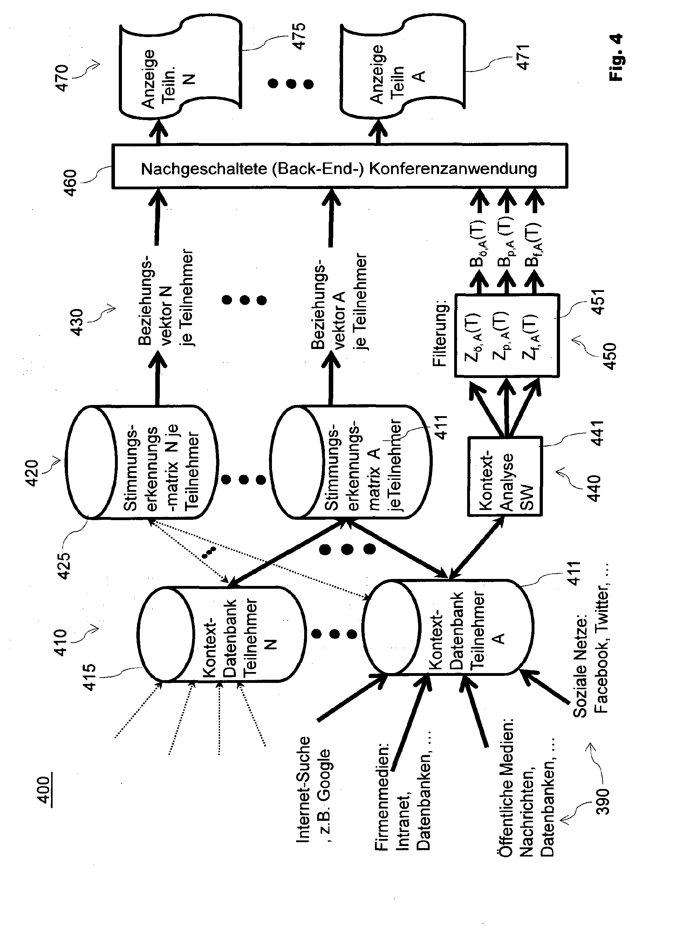

Fig. 4 zeigt ein Blockschaubild, welches Verarbeitungsstufen mit Beziehungen von Hardware- und Software-Komponenten eines Kommunikationssystems bzw. Konferenzsystems, das den Prozess von Fig. 3 ausführt, veranschaulicht. Dabei wird davon ausgegangen, dass an einer Konferenz eine Mehrzahl von Teilnehmern A, ..., N teilnehmen. Die Teilnehmer 121, 122, 123, 124, 125 von Fig. 1 können die Teilnehmer A, ..., N von Fig. 4 sein.

In einer ersten Verarbeitungsstufe bzw. Kontextdatenstufe 410 ist für jeden Teilnehmer A, ..., N eine Kontextdatenbank vorgesehen. In der Figur sind eine erste Kontextdatenbank 411 für den Teilnehmer A und eine n-te Kontextdatenbank 415 für den Teilnehmer N gezeigt. Wenn im Folgenden Verarbeitungswege für die Teilnehmer A und N beschrieben werden, die von den Kontextdatenbanken 411 und 415 ausgehen, ist das Gesagte stets auch für die restlichen Teilnehmer und zugehörige Kontextdatenbanken etc. zu verstehen. Die Kontextdatenbanken 411, ..., 415 werden aufgebaut, indem Kontextdaten zu den Teilnehmern A, ..., N, aus Datenquellen 390 gesammelt werden. Datenquellen 390 können beispielsweise sein:

- Soziale Netze wie z. B. Facebook, Twitter etc.,
- Öffentliche Medien wie z. B. Nachrichten, Datenbanken etc.,
- Firmenmedien wie z. B. Intranet, Datenbanken etc.,
- Internet-Suchen wie z. B. in Google etc,
- und andere.

In einer zweiten Verarbeitungsstufe bzw. Stimmungserkennungsstufe 420 ist für jeden Teilnehmer A, ..., N eine Stimmungserkennungsmatrix vorgesehen, von denen eine erste Stimmungserkennungsmatrix 421 für den Teilnehmer A und eine n-te Stimmungserkennungsmatrix 425 für den Teilnehmer N gezeigt sind. Jede der Stimmungserkennungsmatrizen 421, ..., 425 wird aufgebaut, indem auf die Kontextdatenbanken 411, ..., 415 aller Teilnehmer A, ... N zugegriffen wird, um für jeden Teilnehmer A, ..., N eine Stimmungserkennung (engl. sentiment setection) in Bezug auf jeden anderen Teilnehmer A, ..., N durchzuführen.

In einer dritten Verarbeitungsstufe bzw. Beziehungsstufe 430 ist für jeden Teilnehmer A, ..., N ein Beziehungsvektor für jeden (anderen) Teilnehmer vorgesehen, von denen ein erster Beziehungsvektor 431 des Teilnehmers A und ein n-ter Beziehungsvektor 435 des Teilnehmers N gezeigt sind. Die Beziehungsvektoren 431, ..., 435 werden aus den jeweiligen Stimmungserkennungsmatrizen 421, ..., 425 ermittelt, wobei der Beziehungsvektor 431 die Beziehungen des Teilnehmers A zu allen Teilnehmern A, ..., N repräsentiert und ein n-ter Beziehungsvektor 435 die Beziehungen des Teilnehmers N zu allen Teilnehmern A, ..., N repräsentiert. Die Beziehung eines Teilnehmers zu sich selbst kann im jeweiligen Beziehungsvektor durch eine "0" oder eine "-1" oder einen anderen charakteristischen Wert dargestellt oder ausgelassen werden. Die Beziehungsvektoren werden einer nachgeschalteten (engl. Back-End-) Konferenzanwendung 460 zugeführt, die später zu beschreiben sein wird.

Indessen wird, unabhängig von der vorstehend beschriebenen Stimmungserkennung, in einer vierten Verarbeitungsstufe bzw. Kontextanalysestufe 440 eine Kontextanalyse durchgeführt. Im dargestellten Fall wird die Kontextanalyse nur für den Teilnehmer A durchgeführt. Somit ist in der Kontextanalysestufe 440 nur eine einzige Kontextanalyseeinheit 441 gezeigt, welche eine Kontextanalyse für den Teilnehmer A anhand der in der Kontextdatenbank 411 gespeicherten Kontextdaten durchführt. Die Kontextanalyse umfasst eine Zählung von Ereignissen auf jeder von Beziehungsebenen ö, p, f (siehe oben).

Aus der Kontextanalyse ergeben sich für jede der Beziehungsebenen ö, p, f (siehe oben) Ereigniszählwerte $Z(T)$ in dem voreingestellten Zeitintervall T, d.h., ein Ereigniszählwert $Z_{ö,A}(T)$ für die öffentliche Beziehungsebene des Teilnehmers A, ein Ereigniszählwert $Z_{p,A}(T)$ für die private Beziehungsebene des Teilnehmers A, und ein Ereigniszählwert $Z_{f,A}(T)$ für die Firmenbeziehungsebene des Teilnehmers A.

Die Ereigniszählwerte $Z(T)$ werden einer fünften Verarbeitungsstufe bzw. Filterungsstufe 450 zugeführt. Die Filterungsstufe 450 weist eine Filtereinheit 451 für den Teilnehmer A auf. Die Filtereinheit 451 wendet eine Filterungsfunktion an, um aus den Ereigniszählwerten jeder Beziehungsebene ö, p, f einen Beziehungswert $B(T)$ in dem voreingestellten Zeitintervall T, d.h., einen Beziehungswert $B_{ö,A}(T)$ für die öffentliche Beziehungsebene des Teilnehmers A, einen Beziehungswert $B_{p,A}(T)$ für die private Beziehungsebene des Teilnehmers A, und einen Beziehungswert $B_{f,A}(T)$ für die Firmenbeziehungsebene des Teilnehmers A, zu berechnen und zu kategorisieren (keine, schwache, mittlere oder starke Beziehung, siehe oben), um auch diese Bewertung der nachgeschalteten Konferenzanwendung 460 zuzuführen.

Durch die nachgeschaltete Konferenzanwendung 460 werden alle Beziehungsvektoren 431, ..., 435 sowie alle Beziehungswerte $B_{ö/p/f,A}(T)$ verarbeitet, um in einer letzten Verarbeitungsstufe oder Darstellungsstufe 470 die Darstellungen der Teilnehmer auf einer Bildschirmanzeige oder dergleichen zu steuern. In der Darstellungsstufe 470 werden Darstellungen für jeden Teilnehmer A, ..., N erzeugt, von denen eine erste Darstellung 471 für den Teilnehmer A und eine n-te Darstellung 475 für den Teilnehmer N gezeigt sind. Die Darstellungen der Teilnehmer entsprechen beispielsweise den in Fign. 1, 2A, 2B gezeigten Darstellungen.

Es ist darauf hinzuweisen, dass durch die Verarbeitungen in dem oberen Verarbeitungsast, der durch die Verarbeitungsstufen 420 und 430 gebildet wird, die emotionale Güte der Beziehungen zwischen Teilnehmern ermittelt wird, während durch die Verarbeitungen in dem unteren Verarbeitungsast, der durch die Verarbeitungsstufen 450 und 460 gebildet wird, die Intensität der Beziehungen zwischen Teilnehmern ermittelt wird. Somit kann in der Darstellungsstufe 470 eine zweidimensionale Differenzierung der Beziehung durch die Emoticons 131-135 in der Symbolgruppe hinsichtlich Beziehungsgüte und Beziehungsintensität erzielt werden.

Die Beschreibung geht vorstehend von einem Betrachter des virtuellen Konferenzraums 100 in Fig. 1 aus. Wenn der virtuellen Konferenzraum 100 mehreren Konferenzteilnehmern zur Verfügung steht, ist es denkbar, dass die (unter Umständen sensiblen) Beziehungszustände zu einzelnen Teilnehmern nur einzelnen Teilnehmern auf deren individuellen Endgeräten, etwa in den Auswahlfenstern 210, 230 von Fign. 2A, 2B zur Verfügung gestellt werden, während der Zugriff auf Beziehungszustände anderer Teilnehmer blockiert wird.

Die Erfindung geht zusammengefasst von der Beobachtung aus, dass im Zeitalter prall gefüllter Terminkalender in der Regel keine Zeit bleibt, um sich angemessen auf eine Konferenz vorzubereiten. Besonders bei Konferenzen mit Teilnehmern an anderen Standorten werden Teilnehmer nicht immer wiedererkannt, sodaß vorhandene soziale Beziehungen nicht optimal genutzt werden können. Um dem Gedächtnis auf die Sprünge zu helfen wird vorgeschlagen die zentrale Konferenzeinheit zu erweitern. Erfindungsgemäß werden durch die Konferenzeinheit Beziehungsdaten aus sozialen Netzwerken, firmeninternen organisatorischen Daten, Kommunikations-, Projekt-, Meeting- Daten u. s. w. ermittelt. Es bestehen im Wesentlichen drei Beziehungsebenen (Privat, Firma, Öffentlichkeit), die jeweils in vier Kategorien (stark, mittel, schwach, keine) untergliedert sind. Pro Ebene wird aus Ereignissen innerhalb eines definierten Zeitraums (Monat, Jahr) eine Gesamtbeziehung als Zählwert ermittelt. Mit einer Filterfunktion wird daraus der Beziehungswert berechnet, der in eine der vier Kategorien fällt. Die Filterfunktion definiert eine Vergesslichkeitskurve unter Verwendung einer Vergesslichkeitskonstanten. Durch die Wahl des Zeitraums und der Vergesslichkeitskonstanten kann eine Beziehung an die Eigenschaften einer Person angepasst werden. Die Eingruppierung in eine Kategorie erfolgt durch einen Vergleich mit einem Schwellwert. Das Ergebnis kann abhängig von den Fähigkeiten des Endgerätes in Form von Tonsignalen, Icons, Farben, Emoticons u. s. w. mit der Person verknüpft und ausgegeben werden. Durch die Erfindung ist unter anderem eine Berechnung und Anzeige des Status einer (persönlichen) Beziehung unter Berücksichtigung eines "Alterungsprozesses" möglich. Weiterhin kann dieser Beziehungsstatus zur Steuerung weiterer Funktionen (Priorisieren von Informationen, Aussetzen einer Konferenz, Weiterleitung an einen Vertreter) verwendet werden.

Die unter Bezug auf die dargestellten Ausführungsformen beschriebenen Merkmale der Erfindung, z.B. der Informationsblock 220 in Fig. 2A mit spezifischen Personeninformationen wiedergeben, wie etwa persönlichen Notizen, persönlichen Bewertungen und/oder Lebenslauf, können auch bei anderen Ausführungsformen der Erfindung, beispielsweise zusätzlich oder alternativ zu dem Informationsblock 240 mit einem Aufruf letzter Publikationen und/oder dem Ergebnis der letzten Besprechung in Fig. 2B, vorhanden sein, außer wenn es anders angegeben ist oder sich aus technischen Gründen von selbst verbietet.

Liste der Bezugzeichen und Symbole

| | |
|---|---|
| 100 | virtueller Konferenzraum |
| 110 | Bezugsstruktur (Konferenztisch) |
| 120 | Teilnehmergruppe |
| 121-125 | Teilnehmer einer Konferenz |
| 130 | Symbolgruppe |
| 131-135 | Symbole der Teilnehmer 121-125 |
| 140 | Objektgruppe |
| 141 | Objekt |
| 210 | Auswahlbereich (Auswahlfenster) |
| 220 | Informationsblock |
| 230 | Auswahlbereich |
| 240 | Informationsblock |
| 250 | Informationsblock |
| 300 | Verarbeitungsprozess |
| 310-360 | Prozess-Schritte |
| 390 | Datenquellen |
| 410 | Verarbeitungsstufe (Kontextdatenstufe) |
| 411, 415 | Kontextdatenbanken |
| 420 | Verarbeitungsstufe (Stimmungserkennungsstufe) |
| 421, 425 | Stimmungserkennungsmatrix |
| 430 | Verarbeitungsstufe (Beziehungswertestufe) |
| 431, 435 | Beziehungsvektor |
| 440 | Verarbeitungsstufe (Kontextanalysestufe) |
| 441 | Kontextanalyseeinheit |
| 450 | Verarbeitungsstufe (Filterungsstufe) |
| 451 | Filtereinheit |
| 460 | Back-End-Konferenzanwendung |
| 470 | Verarbeitungsstufe (Darstellungsstufe) |

| 471, 475 | Darstellung |
| --- | --- |
| f | Firmenebene |
| ö | öffentliche Ebene |
| p | private Ebene |
| | |
| B | Beziehungswert |
| T | Zeitintervall (aktuelles) |
| T-1 | Zeitintervall (vorheriges) |
| V | Vergesslichkeitsvektor |
| Z | Ereigniszahl |

Die vorstehende Liste ist integraler Bestandteil der Beschreibung.

**Patentansprüche**

1.  Verfahren zur Steuerung einer Konferenz, bei der aus der Sicht wenigstens eines Teilnehmers wenigstens ein anderer Teilnehmer (121-125) in einem virtuellen Raum (100) dargestellt wird, wobei das Verfahren die zu Beginn der Konferenz und/oder bei Hinzutreten eines neuen Teilnehmers und/oder auf Veranlassung eines des wenigstens einen Teilnehmers auszuführenden Schritte aufweist:

    a) Ermitteln (320) von Kontextdaten (411-415) bezüglich jedes oder wenigstens eines ausgewählten des wenigstens einen anderen Teilnehmers (121-125) bzw. des neuen Teilnehmers in mehreren Zeitintervallen (T, T-1);
    b) Berechnen (330) eines Beziehungswerts (B) aus den Kontextdaten (411-415) in den Zeitintervallen;
    c) Bestimmen (340) eines Beziehungsstatus, wobei der Beziehungsstatus durch eine von mehreren Kategorien ausgedrückt wird, die jeweils durch einen Schwellenwert definiert sind, anhand des berechneten Beziehungswerts; und
    d) Anzeigen (350) des Beziehungsstatus während der Kommunikation.

2.  Verfahren nach Anspruch 1, **dadurch gekennzeichnet, dass** die Kontextdaten (411-415) aus Datenquellen (390) ermittelt werden, die aus der Gruppe ausgewählt sind, welche umfasst:

    - soziale Netzwerke;
    - firmeninterne Kommunikations- und Personenvernetzungsdatenbanken;
    - Verbindungsdatenbanken von Kommunikationsanbietern wie etwa den Anbietern von E-Mail-, Telefonie-, VoIP-, Mobilfunk-Diensten.

3.  Verfahren nach Anspruch 1 oder 2, **dadurch gekennzeichnet, dass** die Kontextdaten (411-415) Ereignisse betreffen, die aus der Gruppe ausgewählt sind, welche umfasst:

    - Kommunikationsereignisse wie etwa Telefonate, e-Mails, SMS, MMS, oder dergleichen;
    - Freundschaftsstatus, Nachrichten, Like-Setzungen, Kommentierungen, Blog-Einträge oder dergleichen;
    - organisatorische Ereignisse;
    - berufliche Zusammenarbeit;
    - Projekte;
    - Meetings;
    - gemeinsame Veröffentlichungen oder Konferenzbeiträge;
    - gemeinsame Reisen oder Veranstaltungen;
    - gemeinsame Interessen;
    - Nachbarschaft;
    - Mitgliedschaft in gleichen Vereinen, Gesellschaften, politischen Parteien oder anderen Personenvereinigungen.

4.  Verfahren nach einem der vorstehenden Ansprüche, **dadurch gekennzeichnet, dass** die Kontextdaten (411-415) ein Zählwert (Z) von Ereignissen, die dem anderen Teilnehmer aus der Sicht des Teilnehmers zuzuordnen sind, sind oder umfassen, wobei vorzugsweise der Zählwert (Z) von Ereignissen zur Berechnung des Beziehungswerts (B) nach zeitlicher Ferne von dem Zeitpunkt der Konferenz und/oder nach Art und/oder Umständen des Ereignisses gewichtet wird.

**5.** Verfahren nach einem der vorstehenden Ansprüche, **dadurch gekennzeichnet, dass** die Zeitintervalle ein aktuelles Zeitintervall (T-1), das bis zum Zeitpunkt der virtuellen Konferenz reicht, und ein vorheriges Zeitintervall (T-1), das dem aktuellen Zeitintervall unmittelbar vorangeht, umfassen, wobei eine Länge der Zeitintervalle insbesondere einen Monat umfasst.

**6.** Verfahren nach Anspruch 1, **dadurch gekennzeichnet, dass** der Beziehungswert nach der Formel

$$B(T) = V \times Z(T) + (1 - V) \times B(T-1)$$

berechnet wird, wobei T ein aktuelles Zeitintervall ist, T-1 ein vorheriges Zeitintervall, das dem aktuellen Zeitintervall unmittelbar vorangeht, ist, Z ein Zählwert von Ereignissen in einem jeweiligen Zeitintervall ist, V ein Faktor ist, der ein Vergessen von Ereignissen über die Zeit simuliert und der einen Wert von 0 bis 1, vorzugsweise von 0,4 bis 0,8, aufweist, und B der Beziehungswert ist.

**7.** Verfahren nach einem der vorstehenden Ansprüche, **dadurch gekennzeichnet, dass** die Schritte a) bis c) für jede oder mehrere ausgewählte oder eine von Beziehungsebenen (p, ö, f) separat ausgeführt werden, wobei die Beziehungsebene/-n aus der Gruppe ausgewählt ist/sind, die umfasst:

- öffentliche Beziehungen;
- private Beziehungen;
- berufliche Beziehungen.

**8.** Verfahren nach einem der vorstehenden Ansprüche, **dadurch gekennzeichnet, dass** die Anzeige des Beziehungsstatus durch ein Mittel erfolgt, das aus der Gruppe ausgewählt ist, die umfasst:

- Tonsignale;
- Farbe, insbesondere eines Hintergrunds, einer Umrandung, einer Füllung;
- Tags;
- Icons, Emoticons;
- Bilder, Grafiken, Karikaturen;
- Filmstücke, Musikstücke, Jingles.

**9.** Verfahren nach einem der vorstehenden Ansprüche, **dadurch gekennzeichnet, dass** der Beziehungsstatus die Kategorien "starke Beziehung", "mittlere Beziehung", "schwache Beziehung" und "keine Beziehung" umfasst.

**10.** Vorrichtung zur Ausführung des Verfahrens nach einem der vorstehenden Ansprüche, wobei die Vorrichtung insbesondere ein Konferenzserver oder eine zentrale Konferenzeinheit oder ein Endgerät ist.

Fig. 1

**Fig. 2A**

**Fig. 2B**

Beginn

Wähle Teilnehmer aus — 310

Soziales Netzwerk

Ermittle Kontextdaten — 320

Firmen-datenbank

Berechne Beziehungswert je Beziehungsebene — 330

Kommunikations-server

Bestimme Beziehungsstatus aus Beziehungswerten — 340

390

Zeige Beziehungs-status an — 350

Alle Teilnehmer bewertet? — 360

nein

ja

Ende

**Fig. 3**

Fig. 4

EP 2 922 015 A1

**Europäisches Patentamt**
**European Patent Office**
**Office européen des brevets**

**EUROPÄISCHER RECHERCHENBERICHT**

Nummer der Anmeldung

EP 15 00 0582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/271197 A1 (JONES BOLAND T [US] ET AL) 3. November 2011 (2011-11-03) * Zusammenfassung; Abbildungen 19, 31 * ----- | 1-10 | INV. G06Q50/00 |

RECHERCHIERTE SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| München | 29. April 2015 | Weidmann, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 00 0582

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2015

| Im Recherchenbericht angeführtes Patentdokument | Datum der Veröffentlichung | Mitglied(er) der Patentfamilie | Datum der Veröffentlichung |
|---|---|---|---|
| US 2011271197 A1 | 03-11-2011 | KEINE | |

Für nähere Einzelheiten zu diesem Anhang : siehe Amtsblatt des Europäischen Patentamts, Nr.12/82

EPO FORM P0461